# EUROPEAN PATENT APPLICATION

(11) **EP 3 098 764 A1**
(43) Date of publication of application: **30.11.2016**
(21) Application number: 16171671.7
(22) Date of filing: 27.05.2016
(51) Int. Cl.: G06Q 10/06

(54) **PRESENTATION OF TASKS TO A USER**

(30) Priority: 29.05.2015 US 201514725722
(71) Applicant: Rockwell Automation Technologies, Inc., Mayfield Heights, OH 44124 (US)
(72) Inventor: ERICSSON, Matthew R., Lyndhurst, OH Ohio 44124 (US); ANAND, Ashish, Mayfield Heights, OH Ohio 44124 (US); HENDERSON, Benjamin, Chardon, OH Ohio 44024 (US); PLUMB-LARRICK, Abigail, Shaker Heights, OH Ohio 44120 (US)
(74) Representative: Grünecker Patent- und Rechtsanwälte PartG mbB

(57) **Abstract**

Techniques to facilitate task performance in an industrial automation environment are disclosed herein. In at least one implementation, an organizational role of a user of a computing system is identified. A set of tasks for the user is determined based on the organizational role of the user. Relative display sizes are assigned to each task in the set of tasks based on a frequency of use of each task. Each task in the set of tasks is displayed according to their relative display sizes on a display system of the computing system.

## Description

### TECHNICAL FIELD

Aspects of the disclosure are related to computing hardware and software technology.

### TECHNICAL BACKGROUND

Software applications that run on computing systems commonly provide some type of user client interface to present information to the user and receive user inputs. Most applications typically present the user with a static list of functions on the user client interface from which the user may select. For example, an operating system typically enables a user to select from menus of system functions, installed applications, and other available operations on the home screen of the operating system.

However, some applications display more features or functions than the user needs, or even knows how to use. In this case, certain individuals may become overwhelmed, both visually and cognitively, by the number of items available for selection. This phenomenon is sometimes referred to as "feature overload", and is increasingly likely to occur when an application serves multiple functions. Unfortunately, many users often find such "overloaded" displays particularly cumbersome and distracting, causing users to waste time and cognitive resources due to confusion or from having to sift through features.

### OVER VIEW

Techniques to facilitate task performance in an industrial automation environment are disclosed herein. In at least one implementation, an organizational role of a user of a computing system is identified. A set of tasks for the user is determined based on the organizational role of the user. Relative display sizes are assigned to each task in the set of tasks based on a frequency of use of each task. Each task in the set of tasks is displayed according to their relative display sizes on a display system of the computing system.

This Overview is provided to introduce a selection of concepts in a simplified form that are further described below in the Detailed Description. It should be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 is a block diagram that illustrates an operational scenario of a computing system in an exemplary implementation.
Figure 2 is a flow diagram that illustrates an operation of a computing system in an exemplary implementation.
Figure 3 is a block diagram that illustrates an operational scenario of a computing system in an exemplary implementation.
Figure 4 is a block diagram that illustrates an operational scenario of a computing system in an exemplary implementation.
Figure 5 is a block diagram that illustrates an operational scenario involving a computing system in an industrial automation environment in an exemplary implementation.
Figure 6 is a block diagram that illustrates a computing system in an exemplary implementation.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

Implementations disclosed herein provide for displaying tasks to users based on their manufacturing roles. Applications typically present users with a static list of functions. However, when an application serves multiple roles or has a large number of features, a user may become overwhelmed, both visually and cognitively, by the number of items available. In a manufacturing environment, user attention is at a premium, and losing time or cognitive resources to confusion or sifting through features is undesirable. The techniques disclosed herein help to reduce this type of "feature overload" by displaying a selected set of tasks based on the organizational role of the user.

In at least one implementation, a computing system identifies an organizational role of a user. Depending on their worker role, users may have different responsibilities in an organization and perform different tasks. Accordingly, the computing system determines a set of tasks based on the organizational role of the user. The computing system also determines how frequently the user performs each of the tasks, and assigns a relative display size to each task based on their frequency of use. Each task in the set of tasks is then displayed according to their relative display sizes on a display system. The display sizes of the tasks may be updated dynamically if the frequency of use changes as the user works.

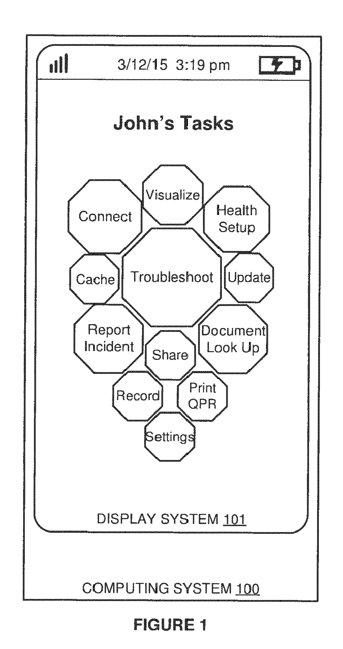

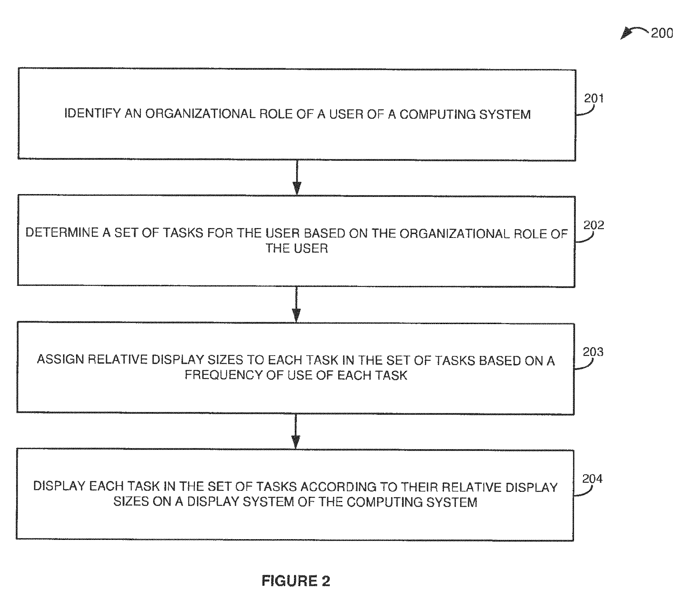

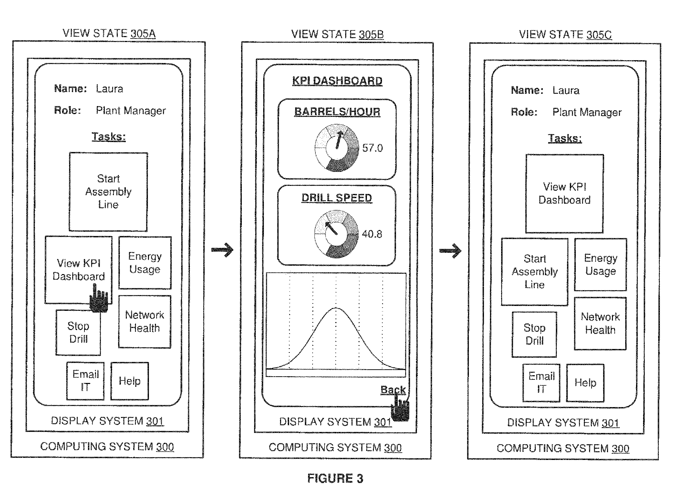

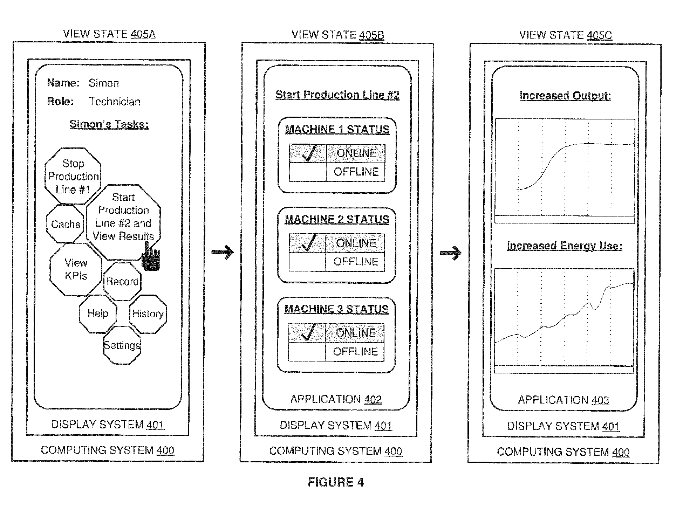

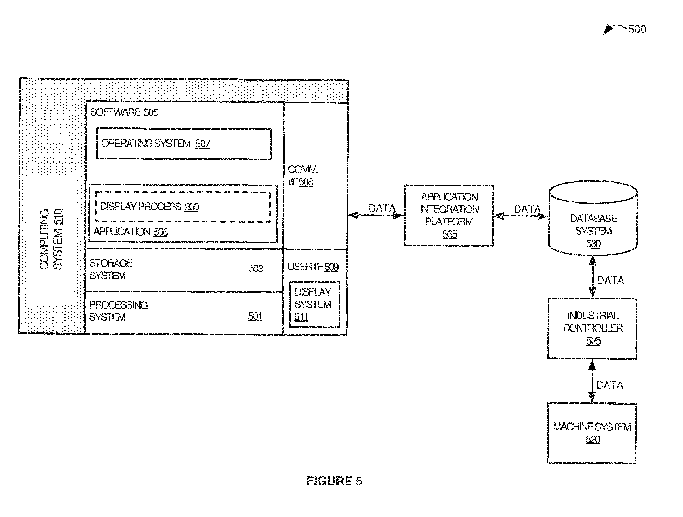

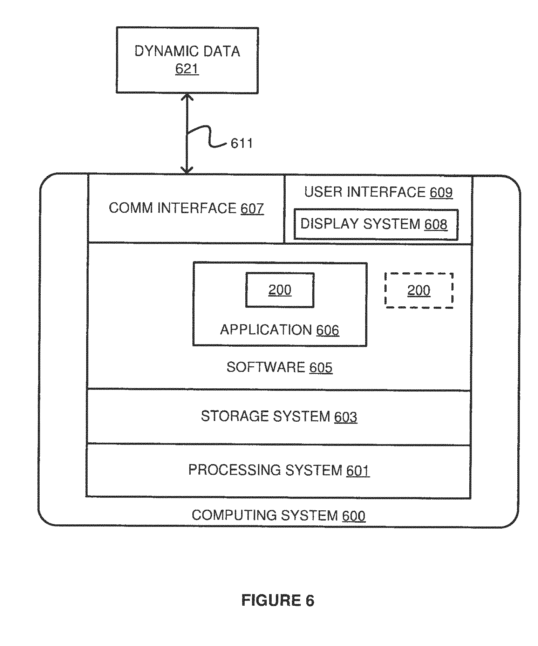

Referring now to the drawings, Figure 1 illustrates an operational scenario where tasks are displayed to a user based on the user's organizational role according to a display process, while Figure 2 illustrates an exemplary display process. Figure 3 illustrates an operational scenario where a user selects a task in an exemplary implementation. Figure 4 illustrates an operational scenario where a task selected by a user involves multiple applications in another exemplary implementation. Figure 5 illustrates an exemplary industrial automation environment that includes a computing system that may be used to execute a display process, and Figure 6 illustrates an exemplary computing system that may be used to perform any of the display processes and operational scenarios described herein.

Turning now to Figure 1, an operational scenario of computing system 100 is illustrated in an exemplary implementation. Computing system 100 comprises display system 101. Display system 101 typically receives data to display from computing system 100, and may be integrated within computing system 100, such as in a laptop computer, tablet, or smartphone, or may be separate from computing system 100, including geographical separation over a communication network.

A set of tasks for a user are displayed on display system 101. In this example, the user John has tasks related to his role as a system administrator. John's tasks are sized according to their frequency of use. In this implementation, the tasks are shaped as octagons, but the tasks could be represented graphically by any image, icon, polygon, graphic, text, or combination thereof in other examples.

The 'Troubleshoot' task is most frequently used by John, so it is displayed largest relative to the other tasks. The 'Connect' task is the second-most used and thus the second largest. The 'Document Look Up' and 'Report Incident' tasks are both the third-most frequently used and are both sized accordingly in octagons slightly smaller than the 'Connect" task. The 'Health Setup' task is next, followed by the 'Visualize' task, and the 'Cache', 'Update', 'Share', 'Record', 'Print QPR', and 'Settings' tasks are shown in the smallest octagons because they are the least frequently used tasks. This technique of displaying tasks based on a user's worker role and sizing the tasks according to their frequency of use both facilitates user operation and better engages the user. An operation of a computing system for displaying tasks to a user will now be described with respect to the flow diagram of Figure 2 in one exemplary implementation.

Figure 2 is a flow diagram that illustrates an operation 200 of a computing system in an exemplary implementation. The operation 200 shown in Figure 2 may also be referred to as display process 200 herein. The steps of the operation are indicated below parenthetically. The following discussion of display process 200 will proceed with reference to computing system 100 and display system 101 of Figure 1 in order to illustrate its operations, but note that the details provided in Figure 1 are merely exemplary and not intended to limit the scope of display process 200 to the specific implementation shown in Figure 1.

Display process 200 may be employed to operate a computing system to facilitate task performance in an industrial automation environment, such as a manufacturing facility, industrial enterprise, or any other organization. As shown in the operational flow of display process 200, an organizational role of a user of computing system 100 is identified (201). The organizational role of the user could be identified by computing system 100 in many ways. In some examples, the user could provide a user identifier as part of a login or authentication procedure, the user could be associated with a device identifier of computing system 100, or the user could otherwise be identified to computing system 100. The user could then be cross-referenced with a database that relates users to their organizational roles, which could be partly or fully carried out by systems over a communication network, such as an on-premise local area network or in the cloud. The organizational role could be determined as described above, could be predetermined and/or hard-coded into computing system 100, or could be determined in any other manner and stored in computing system 100. In some implementations, computing system 100 could therefore identify the organizational role of the user by referring to the user's worker role information previously stored in computing system 100. Other techniques of identifying the organizational role of the user by computing system 100 are possible and within the scope of this disclosure.

Computing system 100 determines a set of tasks for the user based on the organizational role of the user (202). The set of tasks for the user typically relate to functions a worker would carry out in the course of performing the worker's role in an organization. For example, a system administrator might have tasks related to the health and maintenance of a computer network, while a technician may have tasks related to operating and monitoring industrial machinery. In some examples, a task could comprise an application, a module, one or more features of an application, or any other functionality or operations that may be performed, transmitted, requested, received, or triggered by computing system 100. Computing system 100 could determine the set of tasks for the user in many ways. For example, the set of tasks could be predetermined for the user or the user's organizational role, or could be determined dynamically and/or continuously updated by observing user behavior. In at least one implementation, computing system 100 may identify the work tasks that are associated with the user's organizational role to determine the set of tasks for the user. Computing system 100 could also monitor and track which functions the worker typically uses to determine the set of tasks, which could include defining certain tasks as the execution of a series of features from one or more applications. In some implementations, the set of tasks for the user could be stored in computing system 100 or some other communication system. The set of tasks could be customized by the user in some examples, allowing the user to select which tasks should be included or excluded from the set of tasks. In some implementations, each task could involve the execution of one or more features of one or more applications. For example, the set of tasks could comprise a plurality of applications, different features of one or more applications, or any other functionality capable of being executed by computing system 100.

Referring again to Figure 2, computing system 100 assigns relative display sizes to each task in the set of tasks based on a frequency of use of each task (203). The relative display sizes typically comprise graphical representations of each task for display on display system 101 that are sized relative to each other according to how frequently the user performs each task. In some implementations, computing system 100 could assign the relative display sizes to each task in the set of tasks based on the frequency of use of each task by assigning larger sizes of the relative display sizes to more frequently used tasks in the set of tasks. For example, Figure 1 illustrates the 'Troubleshooting' task as the largest display size because this task has the greatest frequency of use by the user. Thus, computing system 100 typically analyzes the historical usage patterns of the user to assign the relative display sizes to each task based on their frequency of use.

Each task in the set of tasks is then displayed according to their relative display sizes on display system 101 of computing system 100 (204). The tasks displayed as differently sized octagons on display system 101 in Figure 1 provide an example of how a set of tasks could be displayed according to their relative display sizes. Therefore, in at least one implementation computing system 100 displays each task in the set of tasks according to their relative display sizes on display system 101 by displaying each task as different octagon icons sized according to the relative display sizes of each task. It should be noted that the icons representing each task could be any shape in other examples, including triangles, squares, pentagons, hexagons, and other polygons, and even non-polygons, including combinations thereof. In some implementations, computing system 101 could also determine the relative arrangement and positioning for the set of tasks displayed on display system 101, which could be based on the frequency of use, the size assigned to each task, or any other factors. For example, computing system 100 could display each task in the set of tasks according to their relative display sizes on display system 101 by displaying tasks having larger sizes of the relative display sizes near a center of display system 101. Generally, computing system 100 would display tasks having a greater frequency of use and a larger relative size in more prominent areas, such as near the center or top of display system 101. In at least one implementation, computing system 100 may observe recent usage frequency of each task in the set of tasks over a time period and update the relative display sizes assigned to each task in the set of tasks based on the recent usage frequency. In this manner, the sizes, arrangement, positioning, and other display properties of the tasks can be updated dynamically as the frequency of use changes.

Advantageously, computing system 100 determines a set of tasks associated with a user's organizational role and displays the tasks according to their relative display sizes. In this manner, tasks that are used with greater frequency are displayed more prominently on display system 101, thereby focusing the user's attention on the most common tasks, streamlining the user experience, and increasing user engagement. This technique also helps avoid overwhelming the user with "feature overload" by limiting the number of tasks displayed to a selected set of tasks based on the organizational role of the user. An exemplary implementation involving the display of another set of tasks and the user's selection of a task will now be discussed with respect to Figure 3.

Figure 3 is a block diagram that illustrates an operational scenario of computing system 300 in an exemplary implementation. Computing system 300 includes display system 301. In this example, display system 301 comprises a touch screen capable of user interaction by accepting input commands from the user via the user's touch on the surface of the touch screen, as represented by the hand icon appearing in Figure 3. However, user input could be provided by a variety of different techniques in other examples, such as entering text commands with a keyboard, clicking a mouse pointer, speaking a voice command, or any other user input mechanism.

In Figure 3, three different view states are shown displayed on display system 301, labeled 305A, 305B, and 305C. The different view states 305A-305C show the changes that occur on display system 301 as the user makes selections and interacts with display system 301. In this example, display system 301 displays a graphical user interface (GUI) provided by human-machine interface (HMI) software that interfaces with machines in an industrial automation environment, such as a robot that performs a task in a manufacturing facility. As shown in view state 305A, the user in this example is named Laura, and her organizational role is Plant Manager. Each of Laura's tasks are selected based on her worker role as Plant Manager, and the number of tasks displayed is limited to avoid muddling the task interface with information pertaining to uncommonly performed tasks. In view state 305A, Laura's selected set of tasks are shown within differently sized boxes, where the size of the box is directly related to the frequency of use of its respective task. In order of largest to smallest size as shown in view state 305A, Laura's tasks include options to 'Start Assembly Line', 'View KPI Dashboard', view 'Energy Usage' or 'Network Health', 'Stop Drill', Email IT', or request 'Help'. In this example, the user selects the option to 'View KPI Dashboard', represented by the hand icon appearing in view state 305A. The 'View KPI Dashboard' task is the second-largest task and thus currently has the second-greatest frequency of use behind the 'Start Assembly Line' option.

View state 305B shows a number of key performance indicators (KPIs) of various plant operations on the KPI Dashboard requested by the user. In this example, the KPI Dashboard is a feature of an HMI application used in an oil extraction industry that displays KPIs related to the extraction of crude oil. In some examples, the KPIs displayed on the KPI dashboard of view state 305B could be previously selected by the user to create a customized display for the KPI Dashboard. As indicated in view state 305B, the KPIs shown on the KPI Dashboard include gauges indicating barrels per hour and drill speed along with a trend diagram. After viewing these KPIs, the user selects the 'Back' link at the bottom of the KPI Dashboard to return to the task selection interface, as represented by the hand icon appearing in view state 305B.

After selecting 'Back", the task selection interface is again displayed, as shown in view state 305C. However, the task interface in view state 305C is different from the one shown in view state 305A, in that the 'View KPI Dashboard' and 'Start Assembly Line' tasks have changed positions and sizes. In particular, due to the user's selection of the 'View KPI Dashboard' task in view state 305A, the frequency of use of the 'View KPI Dashboard' task now exceeds the 'Start Assembly Line' task. In response to this change in frequency of use, computing system 300 updates the set of tasks displayed in view state 305C to reflect that the 'View KPI Dashboard' task now has the greatest frequency of use by displaying it as the largest of all the tasks and in a more prominent position on display system 301. Note that although the display position and arrangement of the tasks is changed in this example, the position of the tasks could remain static and only the relative display sizes of the tasks may be updated pursuant to a change in their frequency of use in some examples. This dynamic display interface provides a very streamlined approach with greater efficiency for the user when selecting tasks for execution. An exemplary implementation involving the display of another set of tasks will now be discussed with respect to Figure 4.

Figure 4 is a block diagram that illustrates an operational scenario of computing system 400 in an exemplary implementation. Computing system 400 includes display system 401 which comprises a touch screen. As shown in view state 405A, the user in this example is named Simon, and his organizational role is Technician. Each of the tasks displayed for Simon are selected based on his worker role as a Technician. In view state 405A, Simon's selected set of tasks are shown within differently sized octagons, where the size of the octagon is directly related to the frequency of use of its respective task. In order of largest to smallest size as shown in view state 405A, Simon's tasks include options to 'Start Production Line #2 and View Results', 'Start Production Line # I', 'View KPIs', 'Cache', 'Record', 'History', 'help', and 'Settings'. In this example, the user selects the option to 'Start Production Line #2 and View Results', represented by the hand icon appearing in view state 405A.

The task to 'Start Production Line #2 and View Results' invokes features of two different applications 402 and 403. In response to the user selecting this task, computing system 400 launches application 402 as shown in view state 405B, which is used to transfer commands that start production line #2. Production line #2 involves the use of three machines. Through the use of application 402, view state 405B shows that the three machines in production line #2 are now online and operational as indicated by their respective machine status.

After using application 402 to start production line #2, computing system 400 launches application 403 to display the results of starting production line #2. As shown in view state 405C, application 403 indicates that as a result of starting production line #2, output has noticeably increased, along with a corresponding increase in energy usage. Thus, the 'Start Production Line #2 and View Results' task initially selected by the user in view state 405A results in the execution of two separate applications 402 and 403 to complete the selected task. This technique of abstracting tasks from various features and functionality of multiple applications installed on computing system 400 provides a task-centric work environment for the user to select and complete these tasks more quickly and efficiently. Moreover, the selected set of tasks based on the organizational role of the user combined with displaying the tasks according to their relative display sizes further facilitates task performance by the user.

Turning now to Figure 5, a block diagram that illustrates an industrial automation environment 500 in an exemplary implementation is shown. Industrial automation environment 500 provides an example of an industrial automation environment that may be utilized to implement the display processes disclosed herein, but other environments could also be used. Industrial automation environment 500 includes computing system 510, machine system 520, industrial controller 525, database system 530, and application integration platform 535. Machine system 520 and controller 525 are in communication over a communication link, controller 525 and database system 530 communicate over a communication link, database system 530 and application integration platform 535 communicate over a communication link, and application integration platform 535 and computing system 510 are in communication over a communication link. Note that there would typically be many more machine systems in most industrial automation environments, but the number of machine systems shown in Figure 5 has been restricted for clarity.

Industrial automation environment 500 comprises an automobile manufacturing factory, food processing plant, oil drilling operation, microprocessor fabrication facility, or some other type of industrial enterprise. Machine system 520 could comprise a sensor, drive, pump, filter, drill, motor, robot, fabrication machinery, mill, printer, or any other industrial automation equipment, including their associated control systems. A control system comprises, for example, industrial controller 525, which could include automation controllers, programmable logic controllers (PLCs), programmable automation controllers (PACs), or any other controllers used in automation control. Additionally, machine system 520 could comprise other industrial equipment, such as a brew kettle in a brewery, a reserve of coal or other resources, or any other element that may reside in an industrial automation environment 500.

Machine system 520 continually produces operational data over time. The operational data indicates the current status of machine system 520, such as parameters, pressure, temperature, speed, energy usage, operational equipment effectiveness (OEE), mean time between failure (MTBF), mean time to repair (MTTR), voltage, throughput volumes, times, tank levels, or any other performance status metrics. The operational data may comprise dynamic charts or trends, real-time video, or some other graphical content. Machine system 520 and/or controller 525 is capable of transferring the operational data over a communication link to database system 530, application integration platform 535, and computing system 510, typically via a communication network. Database system 530 could comprise a disk, tape, integrated circuit, server, or some other memory device. Database system 530 may reside in a single device or may be distributed among multiple memory devices.

Application integration platform 535 comprises a processing system and a communication transceiver. Application integration platform 535 may also include other components such as a router, server, data storage system, and power supply. Application integration platform 535 may reside in a single device or may be distributed across multiple devices. Application integration platform 535 may be a discrete system or may be integrated within other systems - including other systems within industrial automation environment 500. In some examples, application integration platform 535 could comprise a FactoryTalk® VantagePoint server system provided by Rockwell Automation, Inc.

The communication links over which data is exchanged between machine system 520, industrial controller 525, database system 530, application integration platform 535, and communication interface 508 of computing system 510 could use metal, air, space, optical fiber such as glass or plastic, or some other material as the transport medium- including combinations thereof. The communication links could comprise multiple network elements such as routers, gateways, telecommunication switches, servers, processing systems, or other communication equipment and systems for providing communication and data services. These communication links could use various communication protocols, such as TDM, IP, Ethernet, telephony, optical networking, packet networks, wireless mesh networks (WMN), local area networks (LAN), metropolitan area networks (MAN), wide area networks (WAN), hybrid fiber coax (HFC), communication signaling, wireless protocols, communication signaling, peer-to-peer networking over Bluetooth, Bluetooth low energy, Wi-Fi Direct, near field communication (NFC), or some other communication format, including combinations thereof. The communication links could be direct links or may include intermediate networks, systems, or devices.

Computing system 510 may be representative of any computing apparatus, system, or systems on which the display processes disclosed herein or variations thereof may be suitably implemented. Computing system 510 provides an example of a computing system that could be used as a either a server or a client device in some implementations, although such devices could have alternative configurations. Examples of computing system 510 include mobile computing devices, such as cell phones, tablet computers, laptop computers, notebook computers, and gaming devices, as well as any other type of mobile computing devices and any combination or variation thereof. Examples of computing system 510 also include desktop computers, server computers, and virtual machines, as well as any other type of computing system, variation, or combination thereof. In some implementations, computing system 510 could comprise a mobile device capable of operating in a server-like fashion which, among other uses, could be utilized in a wireless mesh network.

Computing system 510 includes processing system 501, storage system 503, software 505, communication interface 508, and user interface 509. Processing system 501 is operatively coupled with storage system 503, communication interface 508, and user interface 509. Processing system 501 loads and executes software 505 from storage system 503. Software 505 includes application 506 and operating system 507. Application 506 may include display process 200 in some examples. When executed by computing system 510 in general, and processing system 501 in particular, software 505 directs computing system 510 to operate as described herein for display process 200 or variations thereof. In this example, user interface 509 includes display system 511, which itself may be part of a touch screen that also accepts user inputs via touches on its surface. Computing system 510 may optionally include additional devices, features, or functionality not discussed here for purposes of brevity.

Turning now to Figure 6, a block diagram is shown that illustrates computing system 600 in an exemplary implementation. Computing system 600 provides an example of computing systems 100, 300, 400, and 510, or any computing system that may be used to execute display process 200 or variations thereof, although such systems could use alternative configurations. Computing system 600 includes processing system 601, storage system 603, software 605, communication interface 607, and user interface 609. User interface 609 comprises display system 608. Software 605 includes application 606 which itself includes display process 200. Display process 200 may optionally be implemented separately from application 606.

Computing system 600 may be representative of any computing apparatus, system, or systems on which application 606 and display process 200 or variations thereof may be suitably implemented. Examples of computing system 600 include mobile computing devices, such as cell phones, tablet computers, laptop computers, notebook computers, and gaming devices, as well as any other type of mobile computing devices and any combination or variation thereof Note that the features and functionality of computing system 600 may apply as well to desktop computers, server computers, and virtual machines, as well as any other type of computing system, variation, or combination thereof.

Computing system 600 includes processing system 601, storage system 603, software 605, communication interface 607, and user interface 609. Processing system 601 is operatively coupled with storage system 603, communication interface 607, and user interface 609. Processing system 601 loads and executes software 605 from storage system 603. When executed by computing system 600 in general, and processing system 601 in particular, software 605 directs computing system 600 to operate as described herein for display process 200 or variations thereof. Computing system 600 may optionally include additional devices, features, or functionality not discussed herein for purposes of brevity.

Referring still to Figure 6, processing system 601 may comprise a microprocessor and other circuitry that retrieves and executes software 605 from storage system 603. Processing system 601 may be implemented within a single processing device but may also be distributed across multiple processing devices or sub-systems that cooperate in executing program instructions. Examples of processing system 601 include general purpose central processing units, application specific processors, and logic devices, as well as any other type of processing device, combinations, or variations thereof.

Storage system 603 may comprise any computer-readable media or storage media readable by processing system 601 and capable of storing software 605. Storage system 603 may include volatile and nonvolatile, removable and non-removable media implemented in any method or technology for storage of information, such as computer-readable instructions, data structures, program modules, or other data. Storage system 603 may be implemented as a single storage device but may also be implemented across multiple storage devices or sub-systems co-located or distributed relative to each other. Storage system 603 may comprise additional elements, such as a controller, capable of communicating with processing system 601. Examples of storage media include random access memory, read only memory, magnetic disks, optical disks, flash memory, virtual memory and non-virtual memory, magnetic cassettes, magnetic tape, magnetic disk storage or other magnetic storage devices, or any other medium which can be used to store the desired information and that may be accessed by an instruction execution system, as well as any combination or variation thereof, or any other type of storage media. In no case is the storage media a propagated signal.

In operation, in conjunction with user interface 609, processing system 601 loads and executes portions of software 605, such as display process 200, to render a graphical user interface for application 606 for display by display system 608 of user interface 609. Software 605 may be implemented in program instructions and among other functions may, when executed by computing system 600 in general or processing system 601 in particular, direct computing system 600 or processing system 601 to identify an organizational role of a user of computing system 600. Software 605 may further direct computing system 600 or processing system 601 to determine a set of tasks for the user based on the organizational role of the user. Software 605 may further direct computing system 600 or processing system 601 to assign relative display sizes to each task in the set of tasks based on a frequency of use of each task. Finally, software 605 may direct computing system 600 or processing system 601 to display each task in the set of tasks according to their relative display sizes on display system 608 of computing system 600.

Software 605 may include additional processes, programs, or components, such as operating system software or other application software. Examples of operating systems include Windows®, iOS®, and Android®, as well as any other suitable operating system. Software 605 may also comprise firmware or some other form of machine-readable processing instructions executable by processing system 601.

In general, software 605 may, when loaded into processing system 601 and executed, transform computing system 600 overall from a general-purpose computing system into a special-purpose computing system customized to facilitate displaying tasks for a user as described herein for each implementation. For example, encoding software 605 on storage system 603 may transform the physical structure of storage system 603. The specific transformation of the physical structure may depend on various factors in different implementations of this description. Examples of such factors may include, but are not limited to the technology used to implement the storage media of storage system 603 and whether the computer-readable storage media are characterized as primary or secondary storage.

In some examples, if the computer-readable storage media are implemented as semiconductor-based memory, software 605 may transform the physical state of the semiconductor memory when the program is encoded therein. For example, software 605 may transform the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate this discussion.

It should be understood that computing system 600 is generally intended to represent a computing system with which software 605 is deployed and executed in order to implement application 606 and/or display process 200 (and variations thereof). However, computing system 600 may also represent any computing system on which software 605 may be staged and from where software 605 may be distributed, transported, downloaded, or otherwise provided to yet another computing system for deployment and execution, or yet additional distribution. For example, computing system 600 could be configured to deploy software 605 over the internet to one or more client computing systems for execution thereon, such as in a cloud-based deployment scenario.

Communication interface 607 may include communication connections and devices that allow for communication between computing system 600 and other computing systems (not shown) or services, over a communication network 611 or collection of networks. In some implementations, communication interface 607 receives dynamic data 621 over communication network 611. Examples of connections and devices that together allow for inter-system communication may include network interface cards, antennas, power amplifiers, RF circuitry, transceivers, and other communication circuitry. The aforementioned network, connections, and devices are well known and need not be discussed at length here.

User interface 609 may include a voice input device, a touch input device for receiving a gesture from a user, a motion input device for detecting non-touch gestures and other motions by a user, and other comparable input devices and associated processing elements capable of receiving user input from a user. Output devices such as display system 608, speakers, haptic devices, and other types of output devices may also be included in user interface 609. The aforementioned user input devices are well known in the art and need not be discussed at length here. User interface 609 may also include associated user interface software executable by processing system 601 in support of the various user input and output devices discussed above. Separately or in conjunction with each other and other hardware and software elements, the user interface software and devices may provide a graphical user interface, a natural user interface, or any other kind of user interface.

The functional block diagrams, operational sequences, and flow diagrams provided in the Figures are representative of exemplary architectures, environments, and methodologies for performing novel aspects of the disclosure. While, for purposes of simplicity of explanation, methods included herein may be in the form of a functional diagram, operational sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The above description and associated drawings teach the best mode of the invention. The following claims specify the scope of the invention. Some aspects of the best mode may not fall within the scope of the invention as specified by the claims. Also, while the preceding discussion describes embodiments employed specifically in conjunction with the monitoring and analysis of industrial processes, other applications, such as the mathematical modeling or monitoring of any man-made or naturally-existing system, may benefit from use of the concepts discussed above. Further, those skilled in the art will appreciate that the features described above can be combined in various ways to form multiple variations of the invention. As a result, the invention is not limited to the specific embodiments described above, but only by the following claims and their equivalents.

## Claims

1. One or more computer-readable storage media having program instructions stored thereon to facilitate task performance in an industrial automation environment, wherein the program instructions, when executed by a computing system, direct the computing system to at least:
identify an organizational role of a user of the computing system;
determine a set of tasks for the user based on the organizational role of the user;
assign relative display sizes to each task in the set of tasks based on a frequency of use of each task; and
display each task in the set of tasks according to their relative display sizes on a display system of the computing system.

2. The one or more computer-readable storage media of claim 1 wherein the program instructions further direct the computing system to observe recent usage frequency of each task in the set of tasks over a time period and update the relative display sizes assigned to each task in the set of tasks based on the recent usage frequency.

3. The one or more computer-readable storage media of claim 1 or 2 wherein the program instructions direct the computing system to display each task in the set of tasks according to their relative display sizes on the display system by directing the computing system to display each task as different octagon icons sized according to the relative display sizes of each task.

4. The one or more computer-readable storage media of one of claims 1 to 3 wherein the program instructions direct the computing system to assign the relative display sizes to each task in the set of tasks based on the frequency of use of each task by directing the computing system to assign larger sizes of the relative display sizes to more frequently used tasks in the set of tasks.

5. The one or more computer-readable storage media of one of claims 1 to 4 wherein the program instructions direct the computing system to display each task in the set of tasks according to their relative display sizes on the display system by directing the computing system to display tasks having larger sizes of the relative display sizes near a center of the display system.

6. The one or more computer-readable storage media of one of claims 1 to 5 wherein the set of tasks comprises a plurality of applications.

7. The one or more computer-readable storage media of one of claims 1 to 6 wherein the set of tasks comprises different features of one or more applications.

8. A method of operating a computing system to facilitate task performance in an industrial automation environment, the method comprising:
identifying an organizational role of a user of the computing system;
determining a set of tasks for the user based on the organizational role of the user;
assigning relative display sizes to each task in the set of tasks based on a frequency of use of each task; and
displaying each task in the set of tasks according to their relative display sizes on a display system of the computing system.

9. The method of claim 8 arranged in accordance with any one of claims 1 to 7.

10. An apparatus to facilitate task performance in an industrial automation environment, the apparatus comprising:
one or more computer-readable storage media; and
program instructions stored on the one or more computer-readable storage media that, when executed by a processing system, direct the processing system to at least:
identify an organizational role of a user of a computing system;
determine a set of tasks for the user based on the organizational role of the user;
assign relative display sizes to each task in the set of tasks based on a frequency of use of each task; and
display each task in the set of tasks according to their relative display sizes on a display system of the computing system.

11. The apparatus of claim 10 wherein the program instructions further direct the processing system to observe recent usage frequency of each task in the set of tasks over a time period and update the relative display sizes assigned to each task in the set of tasks based on the recent usage frequency.

12. The apparatus of claim 10 or 11 wherein the program instructions direct the processing system to display each task in the set of tasks according to their relative display sizes on the display system by directing the processing system to display each task as different octagon icons sized according to the relative display sizes of each task.

13. The apparatus of one of claims 10 to 12 wherein the program instructions direct the processing system to assign the relative display sizes to each task in the set of tasks based on the frequency of use of each task by directing the processing system to assign larger sizes of the relative display sizes to more frequently used tasks in the set of tasks.

14. The apparatus of one of claims 10 to 13 wherein the set of tasks comprises a plurality of applications.

15. The apparatus of one of claims 10 to 14 wherein the set of tasks comprises different features of one or more applications.
